## Europäisches Patentamt

## European Patent Office

## Office européen des brevets

(11) Publication number: **0 094 132**
**B1**

(12) **EUROPEAN PATENT SPECIFICATION**

(45) Date of publication of patent specification: **29.10.86**

(21) Application number: **83200639.9**

(22) Date of filing: **04.05.83**

(51) Int. Cl.⁴: **C 09 K 11/80,** C 09 K 11/66,
H 01 J 61/44

(54) Luminescent screen.

<table>
<tr><td>

(30) Priority: **12.05.82 NL 8201943**

(43) Date of publication of application:
**16.11.83 Bulletin 83/46**

(45) Publication of the grant of the patent:
**29.10.86 Bulletin 86/44**

(84) Designated Contracting States:
**BE DE FR GB IT NL SE**

(56) References cited:
**DE-B-1 154 215**
**FR-A-1 284 867**
**GB-A-1 190 520**
**GB-A-1 205 659**
**GB-A-2 003 316**
**GB-A-2 052 850**
**US-A-4 088 923**

**PHILIPS RESEARCH REPORTS, vol. 23, no. R 662, April, 1968, pages 201-206, Eindhoven, NL G. BLASSE et al.: "Fluorescence of Eu2+-activated alkaline-earth aluminates"**

**CHEMICAL ABSTRACTS, vol. 86, no. 12, 21 March, 1977, page 674, column 2, abstract no. 82409c, Columbus, Ohio, US M.D.**

</td><td>

(73) Proprietor: **N.V. Philips' Gloeilampenfabrieken**
**Groenewoudseweg 1**
**NL-5621 BA Eindhoven (NL)**

(72) Inventor: **Hoeks, Gerardus Petrus Franciscus**
**c/o Int. Octrooibureau B.V. Prof. Holstlaan 6**
**NL-5656 AA Eindhoven (NL)**
Inventor: **van Kemenade, Johannes Trudo Cornelis**
**c/o Int. Octrooibureau B.V. Prof. Holstlaan 6**
**NL-5656 AA Eindhoven (NL)**
Inventor: **van de Velde, Albert Pierre Helena**
**c/o Int. Octrooibureau B.V. Prof. Holstlaan 6**
**NL-5656 AA Eindhoven (NL)**

(74) Representative: **Evers, Johannes Hubertus Marie et al**
**INTERNATIONAAL OCTROOIBUREAU B.V Prof. Holstlaan 6**
**NL-5656 AA Eindhoven (NL)**

(56) References cited:
**KHALUPOVSKII et al.: "Luminophors activated by europium(2+), terbium(3+), and manganese(2+), for low-pressure luminescent lamps"**

</td></tr>
</table>

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**0 094 132**

(56) References cited:

**JOURNAL OF ELECTROCHEMICAL SOCIETY, vol. 126, no. 6, June, 1979, pages 1008-1010, Manchester, GB J. KOIKE et al.: "New tricolor phosphors for gas discharge display"**

## Description

The invention relates to a luminescent screen comprising a support bearing a luminescent layer which comprises an alkaline earth metal aluminate activated with bivalent europium or with bivalent lead, the alkaline earth metal being strontium of which up to 25 mol% may be replaced by calcium, and the molar ratio of total bivalent metal to aluminium in the aluminate having a value of 1:2 to 1:5. The invention further relates to a method of preparing such a luminescent aluminate and to a low-pressure mercury vapour discharge lamp provided with such a luminescent screen.

Luminescent magnesium-containing aluminates of an alkaline earth metal are known from British Patent Specification 1,452,083. One or more of the elements Ba, Sr and Ca may be chosen as the alkaline earth metal. Upon activation of these aluminates with bivalent europium or with bivalent lead, which activators replace a part of the alkaline earth metal, very efficiently luminescing substances are obtained. These known luminescent aluminates have a characteristic hexagonal crystal structure, which shows a great similarity to that of the mineral magneto-plumbite or to that of β-aluminate. The two hexagonal structures of magnetoplumbite and β-aluminate are closely related to each other.

British Patent Specification 1,190,520 discloses luminescent aluminates activated with bivalent europium and having a fundamental lattice defined by the formula $MeAl_{12}O_{19}$ (Me=Ba, Sr and/or Ca). These aluminates also have the characteristic hexagonal crystal structure of magnetoplumbite or β-aluminate. The strontium aluminate activated with bivalent europium has an emission band lying in the deep blue and near UV with a maximum at approximately 400 nm.

From United States Patent Specification 3,294,699 there is known a strontium aluminate activated with bivalent europium and having a fundamental lattice defined by the formula $SrAl_2O_4$. This known aluminate has a monoclinic crystal structure and exhibits an emission band in the green part of the spectrum with a maximum at approximately 520 nm.

The invention has for its object to provide a luminescent screen comprising a novel luminescent aluminate with an efficient emission in spectral ranges which are of great importance for practical applications.

From Sov. Phys. Crystallogr., Vol. 21, No. 4, p. 471, 1976, a crystalline strontium aluminate is known having Sr:Al ratio of 1—3.5 and orthorhombic structure. Experiments which have led to the invention have shown that this orthorhombic phase can be obtained with Sr:Al ratios of 1:2 to 1:5. The crystal structure of this aluminate deviates from that of the aforementioned known aluminates and also from that of the barium aluminate described in Netherlands Patent Application 8105739.

X-ray diffraction analyses, carried out on the powder of the orthorhombic strontium aluminate, yield a characteristic X-ray powder diagram, which is indicated in the following Table I. This Table I indicates the $d$-values (in Å), the associated relative intensities Int (the maximum Int is set to 100) and the allotted indices h, k, l. An X-ray powder diagram is, as is known, characteristic and reproducible for the relevant substance, on the understanding that due to differences in preparation treatment small variations, especially in the intensity ratios, may occur. The allotted indices are based on a unitary cell of the orthorhombic type having as axes $a$=4.88, $b$=24.75 and $c$=8.47. In literature (Sov. Phys. Crystallogr., Vol. 19, No. 2, p. 266, 1974), a strontium hydroxyaluminate $SrAl_3O_5(OH)$ is described, which was obtained hydrothermally and the unitary cell of which is similar to that of the novel aluminate which does not contain a hydroxyl group.

# 0 094 132

TABLE I

| d(Å) | Int | h k l | d(Å) | Int | h k l |
|---|---|---|---|---|---|
| 12.37 | 25 | 0 2 0 | 2.613 | 64 | 1 8 0 |
| 7.001 | 1 | 0 2 1 | 2.570 | 7 | 0 4 3 |
| 6.189 | 15 | 0 4 0 | 2.498 | 53 | 0 8 2 |
| 4.881 | 23 | 1 0 0 | | . | 1 8 1 |
| 4.787 | 8 | 1 1 0 | 2.475 | 13 | 0 10 0 |
| 4.229 | 13 | 0 0 2 | 2.441 | 41 | 2 0 0 |
| 4.202 | 9 | 1 3 0 | 2.430 | 32 | 1 1 3 |
| 4.126 | 15 | 0 6 0 | | | 2 1 0 |
| 4.004 | 35 | 0 2 2 | 2.396 | 17 | 1 2 3 |
| | | 1 2 1 | | | 1 9 0 |
| 3.826 | 11 | 1 4 0 | | | 2 2 0 |
| 3.763 | 21 | 1 3 1 | 2.377 | 24 | 0 10 1 |
| 3.713 | 4 | 0 6 1 | 2.343 | 15 | 1 3 3 |
| 3.495 | 91 | 0 4 2 | 2.332 | 22 | 2 1 1 |
| | | 1 4 1 | | | 0 6 3 |
| 3.197 | 82 | 1 0 2 | 2.271 | 8 | 1 4 3 |
| 3.172 | 23 | 1 1 2 | | | 2 4 0 |
| 3.151 | 10 | 1 6 0 | 2.256 | 7 | 2 3 1 |
| 3.093 | 7 | 1 2 2 | 2.224 | 27 | 1 8 2 |
| | | 0 8 0 | 2.191 | 44 | 2 4 1 |
| 2.981 | 15 | 1 3 2 | | | 1 5 3 |
| 2.952 | 36 | 0 6 2 | | | 2 5 0 |
| | | 1 6 1 | 2.136 | 7 | 0 10 2 |
| 2.861 | 41 | 1 7 0 | | | 1 10 1 |
| 2.840 | 100 | 1 4 2 | 2.120 | 26 | 2 5 1 |
| 2.781 | 1 | x) | | | 0 0 4 |
| 2.754 | 4 | 0 2 3 | 2.105 | 17 | 2 1 2 |
| 2.712 | 8 | 1 7 1 | | | 1 6 3 |
| 2.686 | 15 | 1 5 2 | 2.088 | 7 | 0 2 4 |

x) not to be indicated with the given unitary cell.

4

**0 094 132**

According to the invention a luminescent screen of the kind mentioned in the opening paragraph is characterized in that the aluminate has a crystal structure the X-ray powder diagram of which corresponds to the diagram given above in Table I, and in that the aluminate has a composition corresponding to the formula $Me_{1-p-t}Eu_pPb_t Al_qO_{1.5q+1}$, in which Me is strontium or strontium replaced by calcium up to 25 mol%, in which $2 \leqslant q \leqslant 5$ and in which $0.001 \leqslant p \leqslant 0.10$ in case of europium activation and $0.001 \leqslant t \leqslant 0.10$ in case of lead activation.

It has been found that the activation with bivalent europium or with bivalent lead of the orthorhombic strontium aluminate, the crystal structure of which is characterized by the diagram of Table I, results in that very efficiently luminescing substances are obtained, which can be excited with short-wave as well as with long-wave ultraviolet radiation and also with cathode rays and X-rays. The luminescent screens according to the invention have the advantage that the luminescent aluminates, upon activation with europium, have a blue emission band with a maximum at approximately 490 nm and a half-value width of approximately 60 nm. Such an emission is very desirable, in particular in low-pressure mercury vapour discharge lamps. Upon activation with lead, the novel aluminates yield an efficient emission in the erythema range of the UV spectrum, i.e. an emission band with a maximum at approximately 303 nm and a half-value width of approximately 30 nm. Such an emission may be very desirable in lamps for particular applications.

It has been found that in the novel strontium aluminate, the strontium can be replaced in part, namely up to 25 mol% by calcium, whilst the crystal structure is maintained. This appears from the X-ray powder diagrams of such substances which compared with the diagram of Table I yield substantially the same $d$-values and relative intensities. The emission band of the calcium-containing aluminates is substantially equal to that of the pure strontium aluminate. Strontium is not replaced by calcium in quantities of more than 25 mol% because it has been found that such large quantities of calcium are not incorporated in the lattice and too many side phases are obtained. It should be noted that relatively small quantities of one or more side phases (for example, up to at most approximately 25% by weight) need not always be disturbing. It has been found that barium in very small quantities (at most 10 mol%) may be present in the novel lattice. However, no advantages are obtained by the use of such small quantities of barium and in general the result is, as has been found, a decrease of the efficiency. The pure calcium and barium aluminates having the novel crystal structure could not be formed. The europium or lead used as an activator replaces a part of the alkaline earth metal in the lattice, whilst the crystal structure is maintained.

The novel aluminates can be obtained at values of the molar ratio of total bivalent metal (that is to say strontium, as the case may be calcium and the europium or lead replacing alkaline earth metal) to aluminium in the range of from 1:2 to 1:5. The occurrence of such a range can be explained on the one hand by a possible solubility of $Al_2O_3$ in the lattice and on the other hand by the formation of small quantities of non-disturbing side phases. Outside the said range, too large quantities of side phases are obtained.

As indicated above the novel aluminates in a luminescent screen according to the invention have a composition corresponding to the formula $Me_{1-p-t}Eu_pPb_tAl_qO_{1.5q+1}$, in which Me is strontium or strontium replaced by calcium up to 25 mol% and in which $2 \leqslant q \leqslant 5$. With europium contents p or lead contents t of less than 0.001 only small luminous fluxes are obtained because the absorption of the excitation energy is too low, whilst at values of p resp. t above 0.10 the luminous flux decreases due to concentration quenching.

Preferably a luminescent screen according to the invention is used, which is characterized in that $0.005 \leqslant p \leqslant 0.05$ and $2.5 \leqslant q \leqslant 4.5$. In fact the largest luminous fluxes are obtained with europium activated aluminates, and at values of p in the range of $0.005 \leqslant p \leqslant 0.05$ and values of q in the range $2.5 \leqslant q \leqslant 4.5$. These screens in fact comprise an aluminate with an optimum europium content p and an optimum value of the alkaline earth metal:aluminium ratio for the formation of the desired aluminate phase and are therefore preferably used. The most favourable results are obtained at values of q substantially equal to 3.5.

The luminescent aluminates for the use in a luminescent screen according to the invention can generally be prepared by a solid state reaction at a high temperature of a starting mixture which contains oxides or oxide-supplying compounds of the desired elements in the quantities suitable for the formation of the desired composition. This reaction should take place in a weakly reducing atmosphere (for example, a nitrogen-hydrogen mixture containing 1—10 by volume of hydrogen) in the case of activation with europium, and in an oxidizing atmosphere, for example, in air, in the case of activation with lead. The reaction temperature should lie between 1100 and 1500°C. Furthermore, the use of a melting salt or flux (for example, the use of a part of the required strontium as strontium fluoride) is very desirable.

An advantageous method of preparing the luminescent aluminate, wherein a mixture is made of strontium oxide, of which up to 25 mol% may be replaced by calcium oxide, aluminium oxide and europium oxide or lead oxide or of compounds forming these oxides on heating, the molar ratio of alkaline earth metal to aluminium being chosen from 1:2 to 1:5, and wherein the mixture is heated at a temperature of 1100 to 1500°C is characterized in that boron oxide or a compound forming boron oxide on heating is added to the mixture in a quantity of 0.002 to 0.10 mole of boron per mole of aluminium. It has been found that boron oxide (or, for example, boric acid) promotes the formation of the aluminate phase. Where the formation has proved to be very difficult without the use of a flux, the use of very small quantities of boron (from 0.002 mole of B per mole of Al) already results in that this formation is effected comparatively smoothly. However, it has been found that the quantity of boron to be used must not be large (not larger than 0.10 mole per mole of Al) because with larger quantities undesired compounds are obtained. The product obtained during heating may further be washed with water after being cooled. The end product generally still contains very small quantities of boron.

A luminescent screen according to the invention is preferably used in a low-pressure mercury vapour discharge lamp because the novel luminescent aluminate has an emission very desirable for such lamps and is very satisfactorily excited by the mercury resonance radiation (approximately 254 nm) produced in these lamps.

Such a lamp is preferred in which the alkaline earth metal aluminate is activated with bivalent europium and which is characterized in that the lamp further comprises a green-luminescing substance and a red-luminescing substance. The use of these luminescent substances together with the novel alkaline earth metal aluminate yields a lamp of the type having three emission bands. Such lamps, which serve for general illumination purposes, are very advantageous because high luminous fluxes in combination with a satisfactory colour rendition can be obtained therewith.

A very advantageous lamp of this type is characterized in that the green-luminescing substance is a cerium-magnesium aluminate activated with terbium and the red-luminescing substance is yttrium oxide activated with trivalent europium. These luminescent substances which are known *per se* each have a high luminous flux and a suitable location of the emission. The use of the novel blue-luminescing aluminate in these lamps has the advantage that a more satisfactory colour rendition can be obtained.

Some embodiments of the invention will now be described more fully with reference to a drawing. In the drawing:

Fig. 1 shows diagrammatically and in cross-section a low-pressure mercury vapour discharge lamp according to the invention, and

Fig. 2 shows the spectral energy distribution of the emitted radiation of an alkaline earth aluminate activated with bivalent europium for the use in a luminescent screen according to the invention.

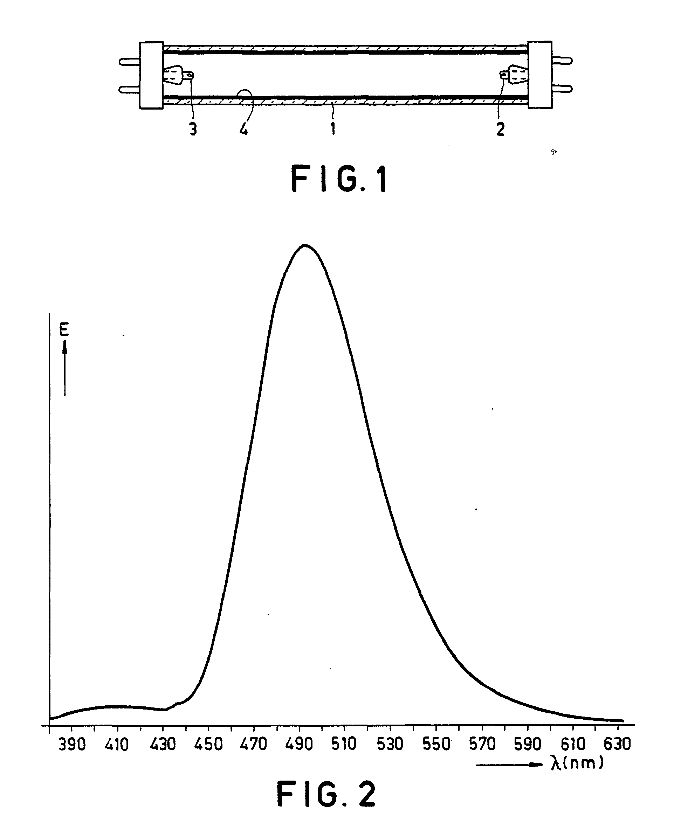

In Fig. 1 reference numeral 1 denotes the glass wall of a low-pressure mercury vapour discharge lamp. Electrodes 2, 3 are arranged one at each end of the lamp and the discharge takes place between these electrodes during operation of the lamp. The lamp comprises a rare gas as the starting gas and a small quantity of mercury. The wall 1 constitutes a luminescent screen and serves as the support for the luminescent layer 4, which comprises a luminescent alkaline earth metal aluminate according to the invention. The layer 4 may be applied on the wall 1 in the usual manner, for example, by means of a suspension comprising the luminescent substance.

Example of preparation 1

A mixture was made of

$$6.070 \text{ g of } ScCo_3$$
$$0.257 \text{ g of } H_3BO_3$$
$$7.410 \text{ g of } Al_2O_3$$
$$0.111 \text{ g of } PbCo_3.$$

This mixture was heated for 2 hours in a furnace in air at 1300°C. After cooling, the product obtained was pulverized and sieved and was then heated for 2 hours in air at 1400°C. The aluminate thus obtained had a composition according to the formula $Sr_{0.99}Pb_{0.01}Al_{3.5}O_{6.25}$. The X-ray powder diagram of this aluminate proved to correspond to the diagram of Table I. (Also of all the examples described below of the novel aluminates, the crystal structures were ascertained by means of X-ray diffraction analyses). It was found that the aluminate had a quantum efficiency of 47% at 254 nm excitation (absorption 90%). The spectral energy distribution of the emission of this substance was found to consist of a band (half-value width approximately 30 nm) with a maximum at approximately 303 nm.

Examples 2 to 7 inclusive

In the same manner as indicated in the Example of preparation 1, a number of aluminates according to the formula $Sr_{1-x}Pb_xAl_{3.5}O_{6.25}$ were obtained with different lead contents x. It was found that these substances all had substantially the same emission as the aluminate according to Example 1. In the following Table II, the measurements of the quantum efficiency q and the absorption A (of the exciting 254 nm radiation) for the Examples 1 to 7 inclusive are indicated.

TABLE II

| Example | x | A(%) | q(%) |
|---------|--------|------|------|
| 1 | 0.01 | 90 | 47 |
| 2 | 0.0025 | 80 | 35 |
| 3 | 0.0050 | 86 | 43 |
| 4 | 0.0075 | 90 | 46 |
| 5 | 0.02 | 92 | 46 |
| 6 | 0.05 | 95 | 41 |
| 7 | 0.10 | 95 | 30 |

Example of preparation 8

A mixture was made of

249.35 g of $SrCO_3$
10.68 g of $H_3BO_3$
308.32 g of $Al_2O_3$
6.84 g of $Eu_2O_3$.

This mixture was heated for 2 hours in a furnace at 1400°C. During this heating process and also during heating and cooling of the furnace, a nitrogen current containing 5% by volume of hydrogen was first conducted through water at 25°C and then through the furnace. After cooling, the product thus obtained was pulverized and sieved and was then subjected again to the same heat treatment. The aluminate thus obtained had a composition according to the formula $Sr_{0.9775}Eu_{0.0225}Al_{3.50}O_{6.25}$. It was found that the aluminate according to this formula had a quantum efficiency of 77% at 254 nm excitation (absorption 91%). The spectral energy distribution of the emission of this substance is shown in Fig. 2. In this Figure, the wavelength $\lambda$ (in nm) is plotted on the abscissa and the relative intensity E per constant wavelength interval (in arbitrary units) is plotted on the ordinate. It is found that the emission band has its maximum at approximately 490 nm and a half-value width of approximately 61 nm. The colour point of the emitted radiation has the co-ordinates x=0.154 and y=0.334.

Example of preparation 9

A mixture was made of

0.528 g of $SrF_2$
5.380 g of $SrCO_3$
7.432 g of $Al_2O_3$
0.183 g of $Eu_2O_3$.

This mixture was heated for approximately 2 hours in a furnace at 1400°C. During the heating process, a nitrogen current containing 5% by volume of hydrogen was first conducted through water at 25°C and then through the furnace. The obtained product was pulverized and sieved and was then subjected again to the same treatment. The aluminate thus obtained had a composition according to the formula $Sr_{0.975}Eu_{0.025}Al_{3.50}O_{6.25}$ and had substantially the same emission as the substance according to Example 8. The quantum efficiency of this aluminate at 254 nm excitation (absorption 93%) was 73%.

Examples 10 to 13 inclusive

In the same manner as indicated in the Example of preparation 8 (but at a firing temperature of 1350°C), three aluminates were prepared, in which the strontium was partly replaced by calcium. These preparations took place on a smaller scale (samples of approximately 15 g) and by way of comparison also a calcium-free aluminate was prepared. The formulae of these aluminates together with the measurements of the quantum efficiency q and the location of the maximum of the emission band $\lambda_{max}$ are indicated in Table III.

TABLE III

| Example | Formula | q(%) | $\lambda_{max}$(nm) |
|---|---|---|---|
| 10 | $Sr_{0.98}Eu_{0.02}Al_{3.5}O_{6.25}$ | 76 | 491 |
| 11 | $Sr_{0.93}Ca_{0.05}Eu_{0.02}Al_{3.5}O_{6.25}$ | 77 | 491 |
| 12 | $Sr_{0.88}Ca_{0.10}Eu_{0.02}Al_{3.5}O_{6.25}$ | 77 | 491 |
| 13 | $Sr_{0.73}Ca_{0.25}Eu_{0.02}Al_{3.5}O_{6.25}$ | 69 | 491 |

Examples 14 to 20 inclusive

In order to check the influence of the europium content, a number of aluminates having the composition $Sr_{1-p}Eu_pAl_{3.50}O_{6.25}$ with different values for p were prepared in the manner indicated in the Example of preparation 8. Measurements on the aluminates thus obtained of the quantum efficiency q, the absorption A of the exciting 254 nm radiation and the location of $\lambda_{max}$ are indicated in Table IV.

TABLE IV

| Example | p | q(%) | A(%) | $\lambda_{max}$(nm) |
|---|---|---|---|---|
| 14 | 0.001 | 63 | 58 | 489 |
| 15 | 0.005 | 77 | 81 | 490 |
| 16 | 0.01 | 80 | 88 | 490 |
| 17 | 0.02 | 79 | 91 | 491 |
| 18 | 0.03 | 77 | 93 | 491 |
| 19 | 0.05 | 74 | 94 | 491 |
| 20 | 0.10 | 67 | 95 | 492 |

Examples 21 to 27 inclusive

A number of aluminates with different alkaline earth metal:aluminium ratios and with a europium content of 0.02 were prepared in the manner indicated in Example 8. The composition of these aluminates as well as the results of the measurement of the quantum efficiency q, of the absorption A of the exciting 254 nm radiation and of $\lambda_{max}$ are indicated in Table V.

TABLE V

| Example | Formula | q(%) | A(%) | $\lambda_{max}$(nm) |
|---|---|---|---|---|
| 21 | $Sr_{0.98}Eu_{0.02}Al_2O_4$ | 51 | 88 | 517 |
| 22 | $Sr_{0.98}Eu_{0.02}Al_{2.5}O_{4.75}$ | 61 | 89 | 502 |
| 23 | $Sr_{0.98}Eu_{0.02}Al_3O_{5.50}$ | 71 | 91 | 493 |
| 24 | $Sr_{0.98}Eu_{0.02}Al_{3.5}O_{6.25}$ | 78 | 92 | 491 |
| 25 | $Sr_{0.98}Eu_{0.02}Al_4O_7$ | 77 | 92 | 491 |
| 26 | $Sr_{0.98}Eu_{0.02}Al_{4.5}O_{7.75}$ | 75 | 92 | 491 |
| 27 | $Sr_{0.98}Eu_{0.02}Al_5O_{8.50}$ | 71 | 92 | 490 |

Of all the substances according to the Examples 21 to 27 inclusive, it was demonstrated that the novel aluminate phase had been obtained. The substance according to Example 21, however, proved to contain a quantity of $SrAl_2O_4$, whilst the substance according to Example 27 contained a small quantity of $SrAl_{12}O_{19}$.

A low-pressure mercury vapour discharge lamp of the kind described with reference to Fig. 1 was provided with a luminescent layer comprising the luminescent aluminate obtained according to the Example of preparation 8. The lamp was of the 36 W type (length approximately 120 cm, lamp diameter approximately 26 mm). The lamp contained 4.92 g of the luminescent aluminate. The luminous flux initially emitted by the lamp proved to be 2740 lm. After an operating time of 100 hours, the luminous flux was 2580 lm, whilst after an operating time of 1000 hours it was 2280 lm. The colour point of the emitted radiation was x=0.152 and y=0.360.

A combination of the blue-luminescing aluminate according to the Example of preparation 8 with a red-luminescing oxide according to the formula $Y_2O_3$-$Eu^{3+}$ and a green-luminescing aluminate according to the formula $CeMgAl_{11}O_{19}$-Tb in a weight ratio of approximately 13:56:31 in a lamp of the same type as described above yields a luminous efficacy of 90 lm/W with a colour rendition index Ra of 84 and a colour temperature of well over 2900 K.

### Claims

1. A luminescent screen comprising a support bearing a luminescent layer which comprises an alkaline earth metal aluminate activated with bivalent europium or with bivalent lead, the alkaline earth metal being strontium of which up to 25 mol% may be replaced by calcium, and the molar ratio of total bivalent metal to aluminium in the aluminate having a value of 1:2 to 1:5, characterized in that the aluminate has a crystal structure the X-ray powder diagram of which corresponds to the diagram given in the Table I above, and in that the aluminate has a composition corresponding to the formula $Me_{1-p-t}Eu_pPb_tAl_qO_{1.5q+1}$, in which Me is strontium or strontium replaced by calcium up to 25 mol%, in which $2 \leqslant q \leqslant 5$ and in which $0.001 \leqslant p \leqslant 0.10$ in case of europium activation and $0.001 \leqslant t \leqslant 0.10$ in case of lead activation.

2. A luminescent screen as claimed in Claim 1, characterized in that $0.005 \leqslant p \leqslant 0.05$ and $2.5 \leqslant q \leqslant 4.5$.

3. A method of preparing a luminescent alkaline earth metal aluminate intended for use in a luminescent screen as claimed in Claim 1 or 2, wherein a mixture is made of strontium oxide of which up to 25 mol% may be replaced by calcium oxide, aluminium oxide and europium oxide or lead oxide or of compounds forming these oxides on heating, the molar ratio of alkaline earth metal to aluminium being chosen from 1:2 to 1:5, and wherein the mixture is heated at a temperature of 1200 to 1500°C, characterized in that boron oxide or a compound forming boron oxide on heating is added to the mixture in a quantity of 0.002 to 0.10 mole of boron per mole of aluminium.

4. A low-pressure mercury vapour discharge lamp provided with a luminescent screen as claimed in Claim 1 or 2, or with a luminescent alkaline earth metal aluminate obtained by means of a method as claimed in Claim 3.

5. A lamp as claimed in Claim 4, characterized in that the alkaline earth aluminate is activated with bivalent europium.

6. A lamp as claimed in Claim 5, characterized in that the lamp further comprises a green-luminescing substance and a red-luminescing substance.

7. A lamp as claimed in Claim 6, characterized in that the green luminescing substance is a cerium magnesium aluminate activated with terbium and the red-luminescing substance is yttrium oxide activated with trivalent europium.

### Patentansprüche

1. Leuchtschirm mit einer auf einem Träger angeordneten Leuchtstoffschicht, die ein mit zweiwertigem Europium oder mit zweiwertigem Blei aktiviertes Erdalkalimetallaluminat enthält, wobei das Erdalkalimetall Strontium ist, das bis zu 25 Mol% durch Kalzium ersetzt sein kann, und das molare Verhältnis des gesamten zweiwertigen Metalls zu Aluminium im Aluminat einen Wert von 1:2 bis 1:5 besitzt, dadurch gekennzeichnet, dass das Aluminat eine Kristallstruktur besitzt, deren Röntgenpulverdiagramm dem in obiger Tabelle I angegebenen Diagramm entspricht, und dass das Aluminat eine Zusammensetzung entsprechend der Formel $Me_{1-p-t}Eu_pPb_tAl_qO_{1,5q+1}$ hat, worin Me Strontium oder durch Kalzium bis zu 25 Mol% ersetztes Strontium ist, worin $2 \leqslant q \leqslant 5$ und $0,001 \leqslant p \leqslant 0,10$ bei Europiumaktivierung und $0,001 \leqslant t \leqslant 0,10$ bei Bleiaktivierung ist.

2. Leuchtschirm nach Anspruch 1, dadurch gekennzeichnet, dass $0,005 \leqslant p \leqslant 0,05$ und $2,5 \leqslant q \leqslant 4,5$ ist.

3. Verfahren zum Herstellen eines leuchtenden Erdalkalimetall-aluminats zur Anwendung in einem Leuchtschirm nach Anspruch 1 oder 2, wobei eine Mischung aus Strontiumoxide, von der bis zu 25 Mol% durch Kalziumoxide ersetzt sein kann, Aluminiumoxid und Europiumoxid oder Bleioxid oder aus Verbindungen, die diese Oxide beim Erhitzen bilden, hergestellt wird, wobei das molaire Verhältnis des Erdalkalimetalls zu Aluminium zwischen 1:2 und 1:5 gewählt wird, und wobei diese Mischung auf eine Temperatur von 1200 bis 1500°C erhitzt wird, dadurch gekennzeichnet, dass Boroxid oder eine Verbindung, die bei Erhitzung Boroxid ergibt, der Mischung in einer Menge von 0,002 bis 0,10 Mol Bor je Mol Aluminium zugegeben wird.

4. Niederdruckquecksilberdampfentladungslampe mit einem Leuchtschirm nach Anspruch 1 oder 2, oder mit einem leuchtenden Erdalkalimetallaluminat, das mit einem Verfahren nach Anspruch 3 erhalten wurde.

5. Lampe nach Anspruch 4, dadurch gekennzeichnet, dass das Erdalkalimetallaluminat mit zweiwertigem Europium aktiviert ist.

6. Lampe nach Anspruch 5, dadurch gekennzeichnet, dass die Lampe weiter einen grünleuchtenden Stoff und einen rotleuchtenden Stoff enthält.

7. Lampe nach Anspruch 6, dadurch gekennzeichnet, dass der grünleuchtende Stoff ein mit Terbium aktiviertes Cermagnesium-aluminat und der rotleuchtende Stoff mit dreiwertigem Europium aktiviertes Yttriumoxid ist.

## Revendications

1. Ecran luminescent comportant un support présentant une couche luminescente, qui contient un aluminate de métal alcalinoterreux activé à l'aide d'europium bivalent ou à l'aide de plomb bivalent, le métal alcalino-terreux étant du strontium qui peut être remplacé jusqu'à 25% en moles par du calcium, et le rapport molaire entre tout le métal bivalent par rapport à l'aluminium dans l'aluminate présente une valeur de 1:2 à 1:5, caractérisé en ce que l'aluminate présente la structure cristalline dont le diagramme de poudre à rayons X correspond au diagramme donné ci-dessus dans le Tableau I et que l'aluminate présente une composition qui répond à la formule $Me_{1-p-t}Eu_pPb_tAl_qO_{1.5q+1}$, dans laquelle Me est du strontium ou du strontium remplacé par du calcium jusqu'à 25% en moles, dans laquelle $2 \leqslant q \leqslant 5$ et dans laquelle $0,001 \leqslant p \leqslant 0,10$ dans le cas d'activation à l'aide d'europium et $0,001 \leqslant t \leqslant 0,10$ dans le cas d'activation à l'aide de plomb.

2. Ecran luminescent selon la revendication 1, caractérisée en ce que $0,005 \leqslant p \leqslant 0,05$ et $2,5 \leqslant q \leqslant 4,5$.

3. Procédé pour la préparation d'un aluminate de métal alcalino-terreux luminescent utilisé dans un écran luminescent selon la revendication 1 ou 2, dans lequel on prépare un mélange d'oxyde de strontium dont au maximum 25% en poids peut être remplacé par de l'oxyde de calcium, de l'oxyde d'aluminium et de l'oxyde d'europium ou de l'oxyde de plomb ou de composés susceptibles de former ces oxydes par chauffage, le rapport molaire entre le métal alcalino-terreux et l'aluminium étant choisi entre 1:2 à 1:5 et dans lequel le mélange est porté à une température de 1200 à 1500°C, caractérisé en ce que de l'oxyde de bore ou un composé pouvant former l'oxyde de bore par chauffage est ajouté au mélange dans une quantité de 0,002 à 0,10 mole de bore par mole d'aluminium.

4. Lampe à décharge dans la vapeur de mercure à basse pression munie d'un écran luminescent selon la revendication 1 ou 2 ou d'un aluminate de métal alcalino-terreux luminescent obtenu à l'aide d'un procédé selon la revendication 3.

5. Lampe selon la revendication 4, caractérisée en ce que l'aluminate alcalino-terreux est activé à l'aide d'europium bivalent.

6. Lampe selon la revendication 5, caractérisée en ce que la lampe contient en outre une substance émettant une luminescence verte et une substance émettant une luminescence rouge.

7. Lampe selon la revendication 6, caractérisée en ce que la substance émettant une luminescence verte est un aluminate de magnésium-cérium activé à l'aide de terbium et la substance émettant une luminescence rouge est de l'oxyde d'yttrium activé à l'aide d'europium trivalent.

FIG.1

FIG. 2